(19) Europäisches Patentamt
European Patent Office
Office européen des brevets

(11) EP 0 678 163 B1

(12) # EUROPÄISCHE PATENTSCHRIFT

(45) Veröffentlichungstag und Bekanntmachung des Hinweises auf die Patenterteilung:
**27.08.1997 Patentblatt 1997/35**

(21) Anmeldenummer: **94900751.2**

(22) Anmeldetag: **04.12.1993**

(51) Int Cl.$^6$: **F02P 5/15**

(86) Internationale Anmeldenummer:
**PCT/DE93/01154**

(87) Internationale Veröffentlichungsnummer:
**WO 94/16213 (21.07.1994 Gazette 1994/17)**

(54) **VERFAHREN ZUR ADAPTIVEN KLOPFREGELUNG EINER BRENNKRAFTMASCHINE**
PROCESS FOR THE ADAPTIVE KNOCK CONTROL OF AN INTERNAL COMBUSTION ENGINE
PROCEDE DE REGLAGE ADAPTATIF DU CLIQUETIS D'UN MOTEUR A COMBUSTION INTERNE

(84) Benannte Vertragsstaaten:
**DE FR GB IT**

(30) Priorität: **09.01.1993 DE 4300406**

(43) Veröffentlichungstag der Anmeldung:
**25.10.1995 Patentblatt 1995/43**

(73) Patentinhaber: **ROBERT BOSCH GMBH
70442 Stuttgart (DE)**

(72) Erfinder:
- **ENTENMANN, Robert
D-87734 Benningen (DE)**
- **UNLAND, Stefan
D-71701 Schwieberdingen (DE)**
- **TORNO, Oskar
D-71701 Schwieberdingen (DE)**
- **HAEMING, Werner
D-74861 Neudenau-Herboldzheim (DE)**
- **ROTHHAAR, Ulrich
D-70469 Stuttgart (DE)**
- **SURJADI, Iwan
D-71665 Vaihingen/Enz (DE)**
- **HILBERT, Wolfgang
D-71696 Moeglingen (DE)**
- **SLOBODA, Robert
D-71706 Markgroeningen (DE)**
- **BAEUERLE, Michael
D-74354 Besigheim-Ottmarsheim (DE)**
- **SCHENK, Klaus
D-74321 Bietigheim-Bissingen (DE)**

(74) Vertreter: **Friedmann, Jürgen, Dr.-Ing. et al
Zentralabteilung Patente,
Postfach 30 02 20
70442 Stuttgart (DE)**

(56) Entgegenhaltungen:
**WO-A-89/12746
WO-A-91/10829
WO-A-92/16740
DE-A- 3 430 080
US-A- 4 617 895**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 678 163 B1

Printed by Jouve, 75001 PARIS (FR)

**Beschreibung**

Stand der Technik

Die Erfindung geht aus von einer adaptiven Klopfregelung. Es ist schon eine solche Klopfregelung aus der DE-OS 40 08 170 bekannt, bei welcher der Zündwinkel anhand eines Kennfeldes eingestellt und bei Auftreten von Klopfen zur Vermeidung dieses Klopfens eine Spätverstellung des Zündwinkels erfolgt. Anschließend wird dieser Zündwinkel durch eine stufenweise Rückführung in Richtung früh wieder an den Kennfeldzündwinkel herangeführt. Weiterhin ist der Betriebsbereich einer Brennkraftmaschine in verschiedene Bereiche unterteilt, so daß beim Verlassen eines Bereiches der momentan aktuelle Zündwinkel abgespeichert wird und beim erneuten Betrieb der Brennkraftmaschine in diesem Bereich dieser abgespeicherte Zündwinkel als Startwert ausgegeben wird. Nun kann bei einem Bereichswechsel der vorher abgespeicherte Zündwinkel vom optimalen Zündwinkel differieren, so daß beim Stand der Technik die Rückführung des Zündwinkels mit vergrößerter Geschwindigkeit durchgeführt wird. Dieses Verfahren hat jedoch insbesondere bei einer großen Differenz des abgespeicherten Zündwinkels zum optimalen Zündwinkel, welcher einen Betrieb nahe der Klopfgrenze gewährleistet, den Nachteil, daß durch die Zündwinkels zum optimalen Zündwinkel, welcher einen Betrieb nahe der Klopfgrenze gewährleistet, den Nachteil, daß durch die Zündwinkel-Sprünge am Motor spürbare Drehmomentensprünge auftreten.

Aus der WO 91/10 829 ist eine Klopfregelung für Brennkraftmaschinen mit einer Kurzzeitregelung, bei deren Auftreten von Klopfereignissen der Wert für einen aktuellen Zündzeitpunkt ausgehend von einer Kennfeldvorgabe in Richtung spät zurückgenommen wird, bekannt. Beim Ausbleiben von Klopfereignissen wird der aktuelle Zündzeitpunkt in Richtung früh wieder auf die Kennfeldvorgabe hingeführt. Desweiteren ist eine Langzeitanpassung der Kennfeldvorgabe vorgesehen, wobei die Kennfeldvorgabe bei auftretenden Klopfereignissen um einen Anpassungswert von der Klopfgrenze weg zurückgenommen bzw. modifiziert wird. Damit erfolgt eine Korrektur des Kennfeldzündwinkels, so daß dann die Kurzzeitregelung auf eine neue Zündzeitpunktvorgabe, also auf ein verändertes Kennfeld zugreift. Damit wird das abgespeicherte Kennfeld ständig verändert und angepaßt.

Die WO 92/16740 betrifft ebenfalls eine Klopfregelung für Brennkraftmaschinen die sich aus einer Kurzzeitregelung und einer Langzeitanpassung zusammensetzt. Hier entspricht die Kurzzeitregelung dem Spätverstellen des vom Kennfeld ausgegebenen Zündzeitpunktes in Richtung spät wenn Klopfen auftritt und in Richtung früh beim Ausbleiben von Klopfen. Damit ist der kurze Zeitregelung eine Langzeitanpassung überlagert, wobei die Kennfeldervorgabe modifiziert wird, so daß die Kurzzeitregelung auf eine neue Zündzeitpunktvorgabe also auf ein anderes Kennfeld bezogen ist. Der Anpassungswert, um welchen die Kennzahlvorgabe verändert wird, wird hierbei über einen Beobachtungszeitraum, der beispielsweise 200 Zündungen betragen soll, durch Mittlung der Regelhübe bestimmt.

Vorteile der Erfindung

Das erfindungsgemäße Verfahren mit den kennzeichnenden Merkmalen des Hauptanspruchs hat demgegenüber den Vorteil, daß die oben beschriebenen Zündwinkel-Sprünge reduziert werden und so keine spürbaren Drehmomentensprünge am Motor auftreten. Als weiterer Vorteil ist anzusehen, daß durch das Vermeiden von ungünstigen Zündwinkeln das Abgasverhalten des Motors verbessert wird.

Durch die in den Unteransprüchen aufgeführten Maßnahmen sind vorteilhafte Weiterbildungen und Verbesserungen des in den nebengeordneten Ansprüchen angegebenen Verfahrens möglich. Weiterhin ist es vorteilhaft zur Mittelwertbildung alle in diesem Bereich ausgegebenen Zündwinkel-Spätverstellwerte oder Anfangs- und Endwert der Zündwinkel-Spätverstellung heranzuziehen. Denkbar ist aber auch das Bilden eines geometrischen, quadratischen oder harmonischen Mittelwertes aller Zündwinkel-Spätverstellwerte eines Bereichs. Letztendlich ist es vorteilhaft, eine Zündwinkeländerungsbegrenzung vorzusehen, so daß beim Überschreiten dieser Zündwinkeländerungsbegrenzung beim Wechsel von einem Betriebsbereich in einen anderen der aktuelle Zündwinkel mit erhöhter Geschwindigkeit an den gespeicherten Zündwinkel herangeführt wird, wodurch Drehmomentensprünge vermieden werden.

Diese Zündwinkeländerungsbegrenzung wirkt nicht bei auftretendem Klopfen, so daß bei Klopfen in jedem Fall eine ausreichende Zündwinkelverstellung für einen klopffreien Betrieb erfolgt. Es sei noch erwähnt, daß die Adaption des Zündwinkels, wenn der abgespeicherte Zündwinkel vom aktuellen Zündwinkel um weniger als einen vorgebbaren Differenzbetrag abweicht, die Stufenbreite und Stufenhöhe der Zündwinkelrückführung auf einen anderen Parametersatz mit langsamerer Regelung umschaltbar ist, so daß eine langsamere Drehmomentenänderung und damit ein ruhiger Betrieb der Brennkraftmschine möglich ist.

Zeichnung

Ausführungsbeispiele der Erfindung sind in der Zeichnung dargestellt und in der nachfolgenden Beschreibung näher erläutert. Es zeigen Figur 1 ein schematisches Blockschaltbild zur adaptiven Klopfregelung, Figur 2 ein Adaptions-Kennfeld und Figur 3 die Veränderung des Zündwinkels aufgrund des erfindungsgemäßen Verfahrens.

Beschreibung der Ausführungsbeispiele

Figur 1 zeigt ein Blockschaltbild zur Durchführung des Verfahrens einer adaptiven Klopfregelung. Die nicht dargestellte Brennkraftmaschine wird mit einem Steuergerät 1 betrieben, das eine Klopfsensor-Auswerteschaltung 2, einen Mikroprozessor 3, einen Analog-Digital-Wandler 4 und eine Zündendstufe 5 aufweist. Am Motorblock der Brennkraftmaschine sind ein oder mehrere Klopfsensoren 6 vorhanden, die an die Klopfsensor-Auswerteschaltung 2 angeschlossen sind. Die Klopfsensor-Auswerteschaltung 2 ist über einen Analog-Diqital-Wandler 4 mit dem Mikroprozessor 3 verbunden. An den Mikroprozessor 3 sind ferner die erfaßten Parameter der Brennkraftmaschine geführt. So wird beispielsweise die Last L, welche beispielsweise aus der Drosselklappenwinkelstellung oder dem Saugrohrdruck ermittelt wird, die Drehzahl n und die Temperatur T dem Mikroprozessor zugeführt. Das vom Klopfsensor erfaßte Klopfsignal KS, welches die Motorgeräusche repräsentiert, wird der Klopfsensor-Auswerteschaltung 2 zugeführt. In dieser Auswerteschaltung 2 wird beispielsweise durch Vergleich mit einem Referenzwert ermittelt, ob ein Klopfen K aufgetreten ist. Beim Auftreten eines Klopfens K erfolgt eine Verstellung des Zündwinkels in Richtung spät sowie eine anschließende Rückführung des Zündwinkels in Richtung früh, was eine Annäherung an den vom Kennfeld ausgegebenen Zündwinkel entspricht. Diese Klopfregelung mit der dazu notwendigen Zündwinkelverstellung wird vom Mikroprozessor 3 vorgenommen. Dieser Mikroprozessor berechnet jeweils aus den vorhandenen Betriebsparametern einen Kennfeld-Zündwinkel, welcher nach Auftreten eines Klopfens mit einer adaptiven Zündwinkelverstellung $\Delta\alpha$ beaufschlagt wird. Im Mikroprozessor 3 ist ein Adaptions-Kennfeld, wie es in Figur 2 dargestellt ist, gespeichert. Dieses Adaptions-Kennfeld ist hierbei in einzelne Betriebsbereiche in Abhängigkeit der Last L und der Drehzahl n unterteilt. Eine genaue Beschreibung dieses Adap- tions-Kennfeldes ist der bereits eingangs zitierten Entgegenhaltung DE-OS 40 08 170 zu entnehmen.

Der Ablauf des erfindungsgemäßen Verfahrens zur Klopfregelung soll anhand von Figur 3 näher erläutert werden. Zum Zeitpunkt t0 beginnt eine Brennkraftmaschine im Betriebsbereich I zu arbeiten. Vom Steuergerät wird somit aufgrund der aktuellen Betriebsparmeter ein Zündwinkel $\alpha_{KF}$ ausgegeben, d.h. der Zündwinkel wird aus einem Kennfeld, welches sich beispielsweise über Drehzahl und Last aufspannt, bestimmt. Während des Betriebs im Betriebsbereich I wird ein Klopfen K dedektiert. Damit erfolgt eine Verstellung des Zündwinkels Um $\Delta\alpha$ in Richtung spät. Anschließend erfolgt eine stufenweise Rückführung des Zündwinkels in Richtung früh, wodurch eine Annäherung an den Kennfeld-Zündwinkel erreicht werden soll. Diese Rückführung erfolgt solange bis ein erneutes Klopfen K auftritt oder bis der Kennfeldzündwinkel erreicht ist. Im Ausführungsbeispiel nach Figur 3 tritt während des Betriebs im Bereich I ein weiteres Klopfen K auf, wodurch eine erneute Spätverstellung des Zündwinkels erfolgt. Zum Zeitpunkt t1 erfolgt ein Bereichswechsel in der Brennkraftmaschine, also beispielsweise ein Wechsel vom Betriebsbereich I in den Betriebsbereich II. Beim Verlassen des Betriebsbereiches I wird ein Zündwinkel $ZW_{SP}$ für diesen Betriebsbereich in einem Speicher des Mikroprozessors 3 abgelegt und beim erneuten Anfahren diese Betriebsbereichs als Startwert für die Zündung zur Verfügung gestellt. Hierbei wird im Gegensatz zum bisherigen Verfahren nicht der letzte ausgegebene Zündwinkel ZWe abgespeichert, sondern ein den Betrieb in diesem Kennfeldbereich repräsentierender Zündwinkelspätverstellwert, z.B. der arithmetischen Mittelwert oder ein mit einem Tiefpaß nachgeführter Spätverstellwert

$$ZW_{SP,neu}=(1-1/N).ZW_{SP,neu}+1/Nx\Delta\alpha_{Z,aktuell},$$

für diesen Betriebsbereich gespeichert. Analog zum Abspeichern des arithmetischen Mittelwertes

$$\bar{x} = 1/n\sum_{i=1}^{n} x_i$$

kann ebenso der geometrische Mittelwert

$$\bar{x} = \sqrt[n]{\left(\prod_{i=1}^{n} x_i\right)} ,$$

der quadratische Mittelwert

$$\bar{x} = \sqrt[2]{\left(\left(\sum_{i=1}^{n} x_i^2\right)/n\right)}$$

oder der harmonische Mittelwert

$$\bar{x} = \frac{n}{\sum_{i=1}^{n} \frac{1}{x_i}}$$

der Zündwinkel-Spätverstellwerte, während des Betriebs in einem Bereich beim Verlassen dieses Bereichs als Startwert beim erneuten Wechsel in diesen Bereich abgespeichert werden. Bei einem erneuten Anfahren des Betriebsbereiches zum Zeitpunkt t2 wird dieser abgespeicherte Zündwinkel $ZW_{sp}$ als Startwert ausgege-

ben und stufenweise in Richtung an den Zündwinkel angepaßt. Beim erneuten Auftreten eines Klopfens K erfolgt wiederum eine Verstellung des Zündwinkels in Richtung spät, welche anschließend stufenweise in Richtung früh verändert wird.

Sollte trotz der oben beschriebenen Berechnung des abgespeicherten Spätverstellwertes beim Wechsel von einem Kennfeldbereich in einen anderen ein größerer Zündwinkelsprung auftreten, so wird mittels einer Zünwinkeländerungsbegrenzung dieser Sprung nicht in einem Schritt sondern in mehreren Schritten ausgeführt. Auf diese Weise können spürbare Drehmomentensprünge vermieden werden. Diese Zündwinkeländerungsbegrenzung wirkt nicht bei einer Zündwinkelspätverstellung aufgrund auftretenden Klopfens.

**Patentansprüche**

**1.** Verfahren zur adaptiven Klopfregelung einer Brennkraftmaschine

- wobei aufgrund der erfaßten Betriebsparameter aus einem Kennfeld ein Zündwinkel für den Betrieb der Brennkraftmaschine ausgewählt wird,
- wobei beim Auftreten von Klopfen in einem Zylinder eine Spätverstellung des Zündwinkels in diesem Zylinder erfolgt,
- und wobei anschließend, wenn kein Klopfen auftritt, eine Rückführung des Zündwinkels in Richtung Kennfeld-Zündwinkel erfolgt,
- wobei der Betriebsbereich der Brennkraftmaschine in Abhängigkeit von Betriebsparametern in verschiedene Bereiche unterteilt ist,
- und wobei beim Verlassen eines Bereiches ein den Betrieb in diesem Bereich repräsentierender Zündwinkel-Spätverstellwert aus den seit dem letztem Wechsel in diesen Bereich aufgetretenen Zündwinkel-Spätverstellwerten gebildet und abgespeichert wird
- und bei einem erneuten Wechsel in diesen Bereich als Anfangswert für den Betrieb der Brennkraftmaschine ausgegeben wird, der dann, wenn kein Klopfen auftritt, in Richtung Kennfeld-Zündwinkel zurückgeführt wird,
- wobei bei einem Bereichswechsel eine Zündwinkeländerungsbegrenzung aktiviert wird und
- wobei bei einer Überschreitung dieser Zündwinkeländerungsbegrenzung der momentane Zündwinkel-Spätverstellwert des Bereichs, der gerade verlassen wird, in mehreren kleineren Schritten an den für den neuen Bereich abgespeicherten Zündwinkel-Spätverstellwert herangeführt wird.

**2.** Verfahren nach Anspruch 1, dadurch gekennzeichnet, daß der abgespeicherte Zündwinkel-Spätverstellwert der mit einem Tiefpaß nachgeführte Spätverstellwert des jeweiligen Bereiches ist: $ZW_{SP,neu} = (1-1/N) \cdot ZW_{SP,neu} + 1/N\Delta\alpha_{Z,aktuell}$, wobei $\Delta\alpha_Z$ eine Verstellung des Zündwinkels in Richtung spät bedeutet.

**3.** Verfahren nach Anspruch 1, dadurch gekennzeichnet, daß der abgespeicherte Zündwinkel-Spätverstellwert der arithmetische Mittelwert

$$\left(\bar{x} = 1/n\sum_{i=1}^{n} x_i\right)$$

aller seit dem letzten Wechsel in diesen Bereich aufgetretenen Zündwinkel-Spätververstellwerte in dem jeweiligen Bereich ist.

**4.** Verfahren nach Anspruch 1, dadurch gekennzeichnet, daß derabgespeicherte Zündwinkel-Spätverstellwert der geometrische Mittelwert

$$\left(\bar{x} = \sqrt[n]{\left(\pi_{i=1}^{n} \quad x_i\right)}\right)$$

aller seit dem letzten Wechsel in diesen Bereich aufgetretenen Zündwinkel-Spätverstellwerte in dem jeweiligen Bereich ist.

**5.** Verfahren nach Anspruch 1, dadurch gekennzeichnet, daß der abgespeicherte Zündwinkel-Spätverstellwert der quadratische Mittelwert

$$\left(\bar{x} = \sqrt[2]{\left(\left(\sum_{i=1}^{n} x_i^2\right)/n\right)}\right)$$

aller seit dem letzten Wechsel in diesen Bereich aufgetretenen Zündwinkel-Spätverstellwerte in dem jeweiligen Bereich ist.

**6.** Verfahren nach Anspruch 1, dadurch gekennzeichnet, daß der abgespeicherte Zündwinkel-Spätverstellwert der harmonische Mittelwert

$$(\bar{x} = \frac{n}{\sum_{i=1}^{n} \frac{1}{x_i}})$$

aller seit dem letzten Wechsel in diesen Bereich aufgetretenen Zündwinkel-Spätverstellwerte in dem jeweiligen Bereich ist.

## Claims

1. Method for the adaptive knock control of an internal combustion engine,

   - an ignition angle for operating the internal combustion engine being selected from a characteristic diagram on the basis of the recorded operating parameters,
   - when knocking occurs in a cylinder the ignition angle in this cylinder being retarded,
   - and subsequently, when no knocking occurs, a return of the ignition angle in the direction of the characteristic-diagram ignition angle taking place,
   - the operating range of the internal combustion engine being subdivided into different ranges as a function of operating parameters,
   - and, when a range is left, an ignition-angle retard value representing operation in this range being formed from the ignition-angle retard values which have occurred in this range since the last change and stored,
   - and, in the event of a renewed change in this range, being outputted as an initial value for the operation of the internal combustion engine which, when no knocking occurs, is returned in the direction of the characteristic-diagram ignition angle,

   characterized in that

   - in the event of a change of range, an ignition-angle change limitation being activated, and characterized in that,
   - if this ignition-angle change limitation is exceeded, the momentary ignition-angle retard value of the range which is just being left being brought in a plurality of relatively small steps to the ignition-angle retard value stored for the new range.

2. Method according to Claim 1, characterized in that the stored ignition-angle retard value is the retard value of the respective range plotted by means of a lowpass filter: $ZW_{SP,new} = (1 - 1/N) \cdot ZW_{SP,new} + 1/N\Delta\alpha_{Z,current}$, $\Delta\alpha_Z$ denoting that the ignition angle is being retarded.

3. Method according to Claim 1, characterized in that the stored ignition-angle retard value is the arithmetic average

$$(\bar{x} = 1/n \sum_{i=1}^{n} x_i)$$

of all the ignition-angle retard values in the respective range which have occurred in this range since the last change.

4. Method according to Claim 1, characterized in that the stored ignition-angle retard value is the geometrical average

$$(\bar{x} = \left( \prod_{i=1}^{n} x_i \right))$$

of all the ignition-angle retard values in the respective range which have occurred in this range since the last change.

5. Method according to Claim 1, characterized in that the stored ignition-angle retard value is the quadratic average

$$(\bar{x} = \sqrt[2]{\left( \left( \sum_{i=1}^{n} x_i^2 \right) / n \right)})$$

of all the ignition-angle retard values in the respective range which have occured in this range since the last change.

6. Method according to Claim 1, characterized in that the stored ignition-angle retard value is the harmonic average

$$(\bar{x} = \frac{n}{\sum_{i=1}^{n} \frac{1}{x_i}})$$

of all the ignition-angle retard values in the respective range which have occurred in this range since

the last change.

## Revendications

1. Procédé de régulation adaptatif du cliquetis dans un moteur à combustion interne, selon lequel

   - sur la base des paramètres de fonctionnement détectés, à partir d'un champ de caractéristiques, on sélectionne un angle d'allumage pour le fonctionnement du moteur à combustion interne,
   - à l'arrivée de cliquetis dans un cylindre, on règle l'angle d'allumage de ce cylindre dans le sens du retard,
   - puis, s'il n'y a pas de cliquetis, on retourne l'angle d'allumage dans le sens d'allumage du champ de caractéristiques,
   - la plage de fonctionnement du moteur à combustion interne est subdivisée en différentes zones dépendant des paramètres de fonctionnement,
   - et en quittant une zone, on forme et on enregistre une valeur de réglage dans le sens du retard de l'angle d'allumage représentant le fonctionnement dans cette zone, en formant cette valeur à partir des valeurs de réglage dans le sens du retard de l'angle d'allumage produites à partir du dernier changement dans cette zone ,
   - et lors d'un nouveau changement dans cette zone, on utilise cette valeur comme valeur initiale pour le fonctionnement du moteur à combustion interne, valeur, qui s'il n'y a pas de cliquetis est rappelée dans le sens de l'angle d'allumage du champ de caractéristiques,
   - pour un changement de zone, on active une limitation de la variation de l'angle d'allumage, et
   - en cas de dépassement de cette limitation de la variation de l'angle d'allumage, la valeur de réglage de l'angle d'allumage dans le sens du retard pour cette zone que l'on vient de quitter est utilisée dans plusieurs petits pas comme valeur de réglage de l'angle d'allumage dans le sens du retard enregistrée pour la nouvelle zone.

2. Procédé selon la revendication 1, caractérisé en ce que la valeur enregistrée de réglage de l'angle d'allumage dans le sens du retard, est la valeur de réglage dans le sens du retard asservie par un filtre passe bas pour la plage respective : $ZW_{PP,nouv} = (1\text{-}1/N) \cdot ZW_{SP,nouv} + 1/N\Delta\alpha_{Z,actuelle}$, dans laquelle $\Delta\alpha_Z$ représente un réglage de l'angle d'allumage dans le sens du retard.

3. Procédé selon la revendication 1, caractérisé en ce que la valeur de réglage de l'angle d'allumage dans le sens du retard est la valeur moyenne arithmétique

$$\bar{x} = (1 / n) \sum_{i=1}^{n} x_i$$

de toutes les valeurs de réglage dans le sens du retard de l'angle d'allumage produites depuis le dernier changement dans cette zone pour cette zone.

4. Procédé selon la revendication 1, caractérisé en ce que la valeur de réglage dans le sens du retard de l'angle d'allumage, mise en mémoire est la valeur moyenne géométrique

$$\bar{x} = \sqrt[n]{\prod_{i=1}^{n} x_i}$$

de toutes les valeurs de réglage dans le sens du retard de l'angle d'allumage produites dans cette zone depuis le dernier changement, pour la zone respective.

5. Procédé selon la revendication 1, caractérisé en ce que la valeur de réglage de l'angle d'allumage dans le sens du retard mise en mémoire est la valeur moyenne quadratique

$$\bar{x} = \sqrt[2]{\left(\sum_{i=1}^{n} x_i^2\right) / n}$$

de toutes les valeurs de réglage de l'angle d'allumage dans le sens du retard produites dans cette zone depuis le dernier changement pour cette zone.

6. Procédé selon la revendication 1, caractérisé en ce que la valeur de réglage de l'angle d'allumage dans le sens du retard mise en mémoire est la valeur moyenne harmonique

$$\bar{x} = \frac{n}{\sum_{i=1}^{n} \frac{1}{x_i}}$$

de toutes les valeurs de réglage de l'angle d'allumage dans le sens du retard produites dans cette zone depuis le dernier changement pour cette zone.

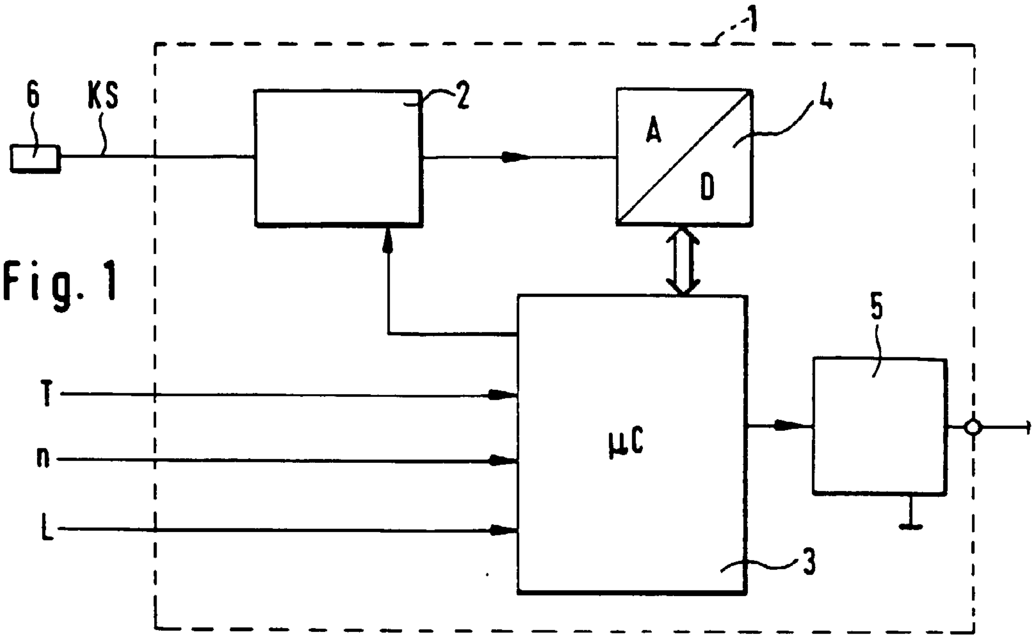


Fig. 1

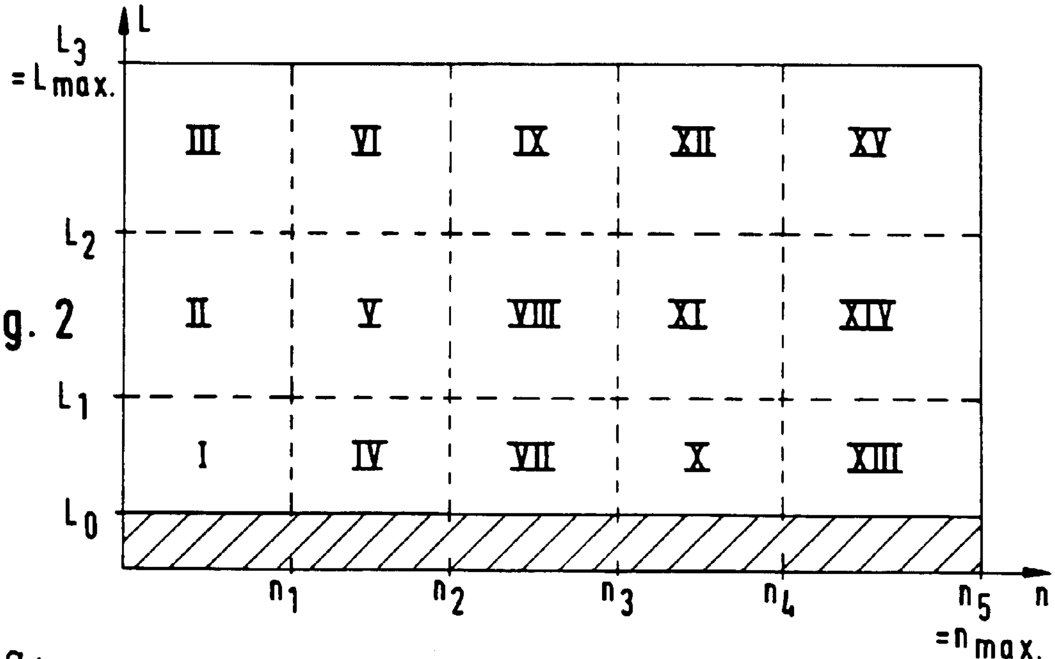


Fig. 2

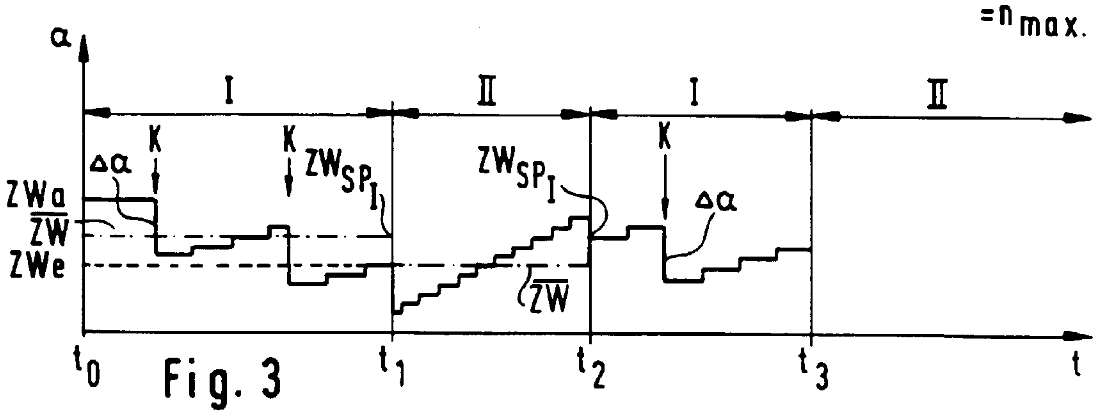


Fig. 3